# EUROPÄISCHE PATENTSCHRIFT

(11) **EP 4 126 572 B1**
(45) Veröffentlichungstag und Bekanntmachung des Hinweises auf die Patenterteilung: **22.05.2024**
(21) Anmeldenummer: 21710243.3
(22) Anmeldetag: 04.03.2021
(51) Int. Cl.: B60G 11/28, F16F 9/04, F16F 9/05

(54) **VERBINDUNGSANORDNUNG ZWISCHEN EINER LUFTFEDER UND EINEM LUFTFEDERTRÄGER**
CONNECTION ASSEMBLY BETWEEN A PNEUMATIC SPRING AND A PNEUMATIC SPRING SUPPORT
ENSEMBLE DE RACCORDEMENT ENTRE UN RESSORT PNEUMATIQUE ET UN SUPPORT DE RESSORT PNEUMATIQUE

(30) Priorität: 23.03.2020 DE 102020203688
(43) Veröffentlichungstag der Anmeldung: 08.02.2023
(73) Patentinhaber: ZF Friedrichshafen AG, 88046 Friedrichshafen (DE)
(72) Erfinder: STIEGLITZ, Andre, 49086 Osnabrück (DE); MÜLLER, Ingolf, 76872 Minfeld (DE); NIEMÖLLER, Paul, 27793 Wildeshausen (DE); HELM, Eike, 49356 Diepholz (DE)
(74) Vertreter: ZF Friedrichshafen AG
(86) Internationale Anmeldenummer: PCT/EP2021/055416
(87) Internationale Veröffentlichungsnummer: WO 2021/190894

(56) Entgegenhaltungen:
- EP-A1- 1 546 574
- EP-A2- 1 541 386
- DE-U1- 29 615 901

## Beschreibung

Die Erfindung betrifft eine Verbindungsanordnung zwischen einer Luftfeder und einem Luftfederträger gemäß dem Oberbegriff von Patentanspruch 1.

Aus dem Stand sind Fahrwerkanordnungen mit luftgefederten Starrachsen bekannt, die sich über jeweils einen Luftfederträger pro Fahrzeugseite und insgesamt zwei oder vier Luftfedern an einen Fahrzeugrahmen abstützen. Dabei sind die Luftfederträger in der Regel unmittelbar an die Starrachse angebunden und die Luftfedern in einer Fahrzeughochrichtung zwischen den Luftfederträgern und den Längsträgern des Fahrzeugrahmens angeordnet. Häufig sind die Luftfedern durch eine Schraubverbindung an die jeweils zugeordneten Luftfederträger angebunden. Luftfedern wie die vorgenannten sind ebenfalls allgemein bekannt und weisen im Wesentlichen einen Deckel, einen Abrollkolben und einen dazwischen luftdicht eingespannten Rollbalg auf. Durch den Deckel, den Abrollkolben und den Rollbalg wird ein unter einem Betriebsdruck von beispielsweise 10 bar stehender Druckraum begrenzt. Der Rollbalg rollt beim Einfedern der Luftfeder unter Ausbildung einer Rollfalte an einer Außenmantelfläche des Abrollkolbens ab. Der Abrollkolben wird auch als Tauchkolben bezeichnet.

Aus der DE 42 03 372 C1 ist eine Verbindungsanordnung zwischen einer Luftfeder und einem Luftfederträger bekannt, die werkzeuglos lösbar ist. Ein Abrollkolben der Luftfeder weist in seiner nach dem Luftfederträger hin gewandten Bodenseite, die als Unterseite bezeichnet wird, eine Ausnehmung auf. An dem Luftfederträger ist ein in die bodenseitige Ausnehmung des Abrollkolbens passender Zentrierkegel befestigt, der von dem Abrollkolben vollständig übergriffen ist. Der Zentrierkegel und der Abrollkolben weisen eine gemeinsame Mittelachse auf, die zugleich auch die Mittelachse der Luftfeder ist. Der Abrollkolben und der Zentrierkegel sind voneinander getrennte Konstruktionsteile, die im normalen Fahrbetrieb eines Fahrzeugs ineinandergreifen. Bei einer Kran- und Bahnverladung des Fahrzeugs können sich der Abrollkolben und der Zentrierkegel aber auseinander bewegen. Der Abrollkolben stützt sich im normalen Fahrbetrieb über seinen Umfang unter Ausbildung einer Kreislinienberührung auf einer mit dem Luftfederträger verschraubten, separaten Bodenplatte ab. Der Abrollkolben und die Luftfederträger sind durch die Bodenplatte voneinander beabstandet. Der Zentrierkegel weist den gleichen Außendurchmesser auf wie der Abrollkolben. Eine Mantelfläche des Zentrierkegels, die nach Art einer Mantelfläche eines Kegelstumpfs ausgebildet ist, liegt im normalen Fahrbetrieb frei und hat keine tragende Funktion. Auf einer der Bodenseite des Abrollkolbens gegenüberliegenden Oberseite des Abrollkolbens ist ein Anschlagpuffer befestigt, der sich bei entlüfteter Luftfeder gegen eine Innenseite eines Deckels der Luftfeder legt.

Dokument DE29615901U wird als nächstliegendes Stand der Technik angesehen.

Aufgabe der Erfindung ist es, eine alternative Ausführung einer Verbindungsanordnung zwischen einer Luftfeder und einem Luftfederträger bereitzustellen.

Diese Aufgabe wird gemäß der vorliegenden Erfindung gelöst durch eine gattungsgemäße Verbindungsanordnung, welche zusätzlich die kennzeichnenden Merkmale des Patentanspruchs 1 aufweist.

Bevorzugte Ausführungsformen und Weiterbildungen sind Gegenstand der Unteransprüche und der nachfolgenden Beschreibung. Weitere Merkmale und Details der Erfindung ergeben sich aus den Zeichnungsfiguren.

Die Erfindung sieht demnach eine Verbindungsanordnung zwischen einer Luftfeder und einem Luftfederträger vor, wobei die Verbindungsanordnung werkzeuglos lösbar ist. Ein Abrollkolben der Luftfeder weist in seiner dem Luftfederträger zugewandten Bodenseite eine Ausnehmung auf. An dem Luftfederträger ist ein in die bodenseitige Ausnehmung des Abrollkolbens passender Zentrierkegel befestigt, der von dem Abrollkolben vollständig übergriffen ist. Der Zentrierkegel und der Abrollkolben weisen eine gemeinsame Mittelachse auf, die zugleich auch die Mittelachse der Luftfeder ist. Erfindungsgemäß sind der Abrollkolben und der Zentrierkegel aus Kunststoff gebildet. Zugleich stützt sich der Abrollkolben in Richtung der Mittelachse sowohl unmittelbar an dem Zentrierkegel als auch unmittelbar an dem Luftfederträger flächig anliegend ab.

Durch die flächig anliegende Abstützung des Abrollkolbens an zwei Bauteilen, nämlich an dem Zentrierkegel und an dem Luftfederträger, wird die in einem Einbauzustand durch die Verbindungsanordnung zu übertragende Kraftkomponente, die in Richtung der Mittelachse wirkt, auf diese beiden Bauteile aufgeteilt. Durch die flächig anliegende Abstützung des Abrollkolbens an den beiden vorgenannten Bauteilen wird zugleich auch die für eine Kraftübertragung in Richtung der Mittelachse zur Verfügung stehende Kontaktfläche vergrößert. Dadurch kann die Flächenpressung in der gemeinsamen Kontaktfläche von Abrollkolben, Zentrierkegel und Luftfederträger relativ gering gehalten werden und somit der Einsatz von Kunststoffbauteilen ermöglicht werden. Eine unmittelbare, flächig anliegende Abstützung des Abrollkolbens sowohl an dem Zentrierkegel als auch an dem Luftfederträger ist eigentlich geometrisch überbestimmt und wäre mit einem quasi nicht nachgiebigen metallischen Abrollkolben und einem ebenfalls quasi nicht nachgiebigen metallischen Zentrierkegel praktisch nicht erreichbar. Dies liegt darin begründet, dass der Herstellungsaufwand zur Erreichung einer unmittelbaren, flächig anliegenden Abstützung von metallischem Abrollkolben, Zentrierkegel und Luftfederträger toleranzbedingt nur mit unverhältnismäßig hohem Bearbeitungsaufwand erreichbar wäre.

Dadurch, dass der Abrollkolben und der Zentrierkegel aus Kunststoff gebildet sind, weist die Verbindungsanordnung toleranzausgleichende Nachgiebigkeiten auf, die eine unmittelbare, flächig anliegende Abstützung des Abrollkolbens sowohl an dem Zentrierkegel als auch an dem Luftfederträger ermöglichen. Durch die Verwendung eines Abrollkolbens und eines Zentrierkegels aus Kunststoff ergibt sich zudem ein Gewichtsvorteil gegenüber einer Verwendung von metallischen Bauteilen. Unter einer werkzeuglos lösbaren Verbindungsanordnung ist vorliegend eine Verbindungsanordnung zu verstehen, die von Hand und ohne Zuhilfenahme von Hilfswerkzeugen, wie beispielsweise einem Schraubenschlüssel, gelöst werden kann.

Insbesondere ist der Abrollkolben einbaufertig in einem Stück ausgebildet. Insbesondere besteht der Abrollkolben aus einem thermoplastischen Kunststoff und ist in einem Spritzgussverfahren hergestellt. Insbesondere ist der Zentrierkegel Bestandteil eines Zentrierzapfens. Insbesondere ist der Zentrierkegel kegelstumpfförmig ausgebildet. Insbesondere stützt sich der Abrollkolben in Richtung der Mittelachse an einer Kegelmantelfläche oder an einer Kegelstumpfmantelfläche des Zentrierkegels ab. Insbesondere ist die Bodenseite des Abrollkolbens identisch mit der Bodenseite der Luftfeder. Insbesondere weist die Luftfeder einen Druckraum auf, der sich in den Abrollkolben hinein erstreckt und der sich zugleich in Richtung der Mittelachse im Wesentlichen über die gesamte Länge des Abrollkolbens erstreckt. Durch einen Druckraum, der sich in den Abrollkolben hinein erstreckt, ergibt sich insgesamt ein relativ großer Druckraum in der Luftfeder was dem Federungskomfort der Luftfeder zugute kommt.

Vorteilhaft ist die bodenseitige Ausnehmung des Abrollkolbens als ein rotationssymmetrisch zu der Mittelachse der Luftfeder ausgebildeter, konischer Dom ausgebildet, in den der Zentrierkegel formschlüssig und zugleich flächig anliegend eingreift. Insbesondere stützt sich der Dom unter Ausbildung einer Kontaktfläche, die nach Art einer Mantelfläche eines Kegelstumpfs ausgebildet ist, an dem Zentrierkegel ab. Über die nach Art einer Mantelfläche eines Kegelstumpfs ausgebildete Kontaktfläche können sowohl senkrecht zu der Mittelachse wirkende Radialkräfte in beliebigen Richtungen als auch in Richtung der Mittelachse wirkende Axialkräfte übertragen werden.

Zweckmäßig ist der Dom nach der Bodenseite des Abrollkolbens hin konisch aufgeweitet ausgebildet und weist an der Bodenseite einen Durchmesser auf, der weniger als halb so groß ist wie der Außendurchmesser des Abrollkolbens. Vorteilhaft weist der Dom an der Bodenseite, also beim Übergang des Doms in die Bodenseite, einen Durchmesser auf, der im Wesentlichen ein Drittel so groß ist wie der Außendurchmesser des Abrollkolbens.

Bevorzugt ist ein Druckraum der Luftfeder lediglich durch eine kreisringförmige Wandung des Abrollkolbens von dem Luftfederträger getrennt, wobei die kreisringförmige Wandung in einem Betriebszustand von der Druckraumseite her mit einem Betriebsdruck beaufschlagt ist. Mit der Formulierung, wonach ein Druckraum der Luftfeder lediglich durch eine kreisringförmige Wandung des Abrollkolbens von dem Luftfederträger getrennt ist, soll zum Ausdruck gebracht werden, dass die kreisringförmige Wandung des Abrollkolbens unmittelbar flächig, also ohne Luftspalt, an dem Luftfederträger anliegt. Insbesondere liegt die kreisringförmige Wandung des Abrollkolbens unter Ausbildung einer kreisringförmigen Kontaktfläche an dem Luftfederträger an. Insbesondere ist die kreisringförmige Wandung des Abrollkolbens zugleich eine Wandung des Druckraums. Dadurch, dass die kreisringförmige Wandung zugleich eine Wandung des Druckraums ist, stützt der Betriebsdruck die kreisringförmige Wandung von innen gegen eine von außen durch den Luftfederträger auf die kreisringförmige Wandung einwirkende Stützkraft ab mit der sich die Luftfeder auf dem Luftfederträger abstützt. Die Wandstärke der kreisringförmigen Wandung kann daher geringer ausgelegt werden als dies der Fall wäre, wenn die durch den Betriebsdruck bewirkte Abstützung von innen nicht gegeben wäre. Es versteht sich, dass die kreisringförmige Wandung luftundurchlässig ausgebildet ist.

Vorteilhaft weist der Abrollkolben eine kreisringförmige Wandung auf, die sich senkrecht zu der Mittelachse der Luftfeder erstreckt und die sich unmittelbar auf dem Luftfederträger flächig anliegend abstützt. Insbesondere ist die kreisringförmige Wandung luftundurchlässig ausgebildet. Insbesondere bilden der Abrollkolben und der Luftfederträger eine gemeinsame Kontaktfläche aus, die als eine Kreisringfläche ausgebildet ist.

Zweckmäßig weist der Abrollkolben eine ringförmig ausgebildete, luftundurchlässige Zwischenwand auf, die an der Bodenseite des Abrollkolbens die kreisringförmige Wandung einfasst und die zugleich konzentrisch zu einer ringförmigen Außenwand des Abrollkolbens angeordnet ist sowie von dieser ringförmigen Außenwand umschlossen ist. Die Luftundurchlässigkeit der Zwischenwand ist vorteilhaft, um den Abrollkolben kostengünstig in einem Arbeitsgang in einem Spritzgussverfahren einbaufertig herstellen zu können. In einem Einbauzustand in einem Kraftfahrzeug trägt der Abrollkolben einen Teil der Masse eines Fahrzeugaufbaus. Ein Großteil dieser Masse wird über die Zwischenwand in den Luftfederträger weitergeleitet. Insbesondere ist die Zwischenwand umfänglich geschlossen und zugleich rotationssymmetrisch ausgebildet.

Bevorzugt ist ein im Wesentlichen hohlzylindrisch ausgebildeter Zwischenraum, der zwischen der Zwischenwand und der Außenwand angeordnet ist, nach der Bodenseite hin offen ausgebildet. Dies ist eine weitere Voraussetzung dafür, dass der Abrollkolben kostengünstig in einem Arbeitsgang in einem Spritzgussverfahren einbaufertig herstellbar ist.

Vorteilhaft weist der Zentrierkegel einen Kegelwinkel von weniger als 45 Grad, vorzugsweise von circa 30 Grad, auf. Durch den relativ schlanken Kegelwinkel sitzt der Zentrierkegel rotationsgehemmt in dem Dom. Durch den relativ schlanken Kegelwinkel ist die Verbindungsanordnung zwar weiterhin werkzeuglos lösbar; weist aber einen gewissen Widerstand gegen eine Trennung von Zentrierkegel und Abrollkolben auf. Dieser Widerstand kann bei einer Montage von Fahrwerkanordnungen in einer gegenüber der normalen Straßenlage um 180 Grad gewendeten Montagelage, wie sie teilweise in Herstellerwerken angewandt wird, hilfreich sein. In einer solchen Montagelage ist ein Fahrzeugrahmen, an dem die Luftfeder über einen Deckel derselben befestigt ist, dem Hallenboden zugewandt. Zur Komplettierung der Fahrwerkanordnung wird eine Starrachse zusammen mit dem Luftfederträger und darin vormontierten Zentrierzapfen durch einen Hallenkran von oben zugeführt und anschließend montiert. Dabei werden auch die Zentrierkegel von oben in die jeweils zugeordneten Dome der Abrollkolben eingeführt. Bei einem abschließenden Wenden der fertig montierten Fahrwerkanordnung in die Straßenlage hilft der vorgenannte Widerstand gegen eine Trennung von Zentrierkegel und Abrollkolben dabei, dass der Zentrierkegel und der Abrollkolben nicht ungewollt wieder separieren. In der fertig montierten Verbindungsanordnung sitzt der Zentrierkegel insbesondere rotationsgehemmt in dem Dom. Ein relativ schlanker Zentrierkegel hat zudem den Vorteil, dass er bei der Herstellung, insbesondere in einem Spritzgussverfahren, weniger geometrischen Verzug aufweist.

Bevorzugt ist der Zentrierkegel Bestandteil eines Zentrierzapfens und weist darüber hinaus einen sich in Richtung der Mittelachse der Luftfeder erstreckenden Schaft auf, der den Luftfederträger durchsetzt. Insbesondere ist der aus dem Zentrierkegel und dem Schaft bestehende Zentrierzapfen einstückig ausgebildet. Insbesondere steht das dem Zentrierkegel abgewandte Ende des Schaftes aus dem Luftfederträger vor, um das Anbringen einer Ausziehsicherung, beispielsweise eines Sicherungsrings, zu ermöglichen. Insbesondere weist der Schaft an dem vorstehenden Ende eine umlaufende Nut zur Aufnahme der Ausziehsicherung auf.

Zweckmäßig weisen der Schaft und eine diesen aufnehmende Bohrung in dem Luftfederträger zueinander eine Spielpassung auf, wodurch der Schaft in der Bohrung drehbar ist. Auf diese Weise können in einem Fahrbetrieb auftretende Relativbewegungen in einem gemeinsamen Kontaktbereich der Luftfeder und des Luftfederträgers auf einfache Weise ausgeglichen werden. Solche Relativbewegungen können beispielsweise hervorgerufen sein durch ein einseitiges Einfedern einer Starrachse, Wankbewegungen eines Fahrzeugaufbaus oder ein Überfahren einer Bordsteinkante.

Gemäß einer Weiterentwicklung der Erfindung stützt sich der Abrollkolben auf einem kreisrunden Aufnahmeteller des Luftfederträgers ab, wobei der Aufnahmeteller zumindest im Wesentlichen den gleichen Außendurchmesser aufweist wie der Abrollkolben an seiner Bodenseite. Somit sind der Abrollkolben und der Aufnahmeteller zumindest im Wesentlichen bündig angeordnet, wodurch während eines Fahrbetriebs in diesem Bereich eine Ablagerung von Verunreinigungen unterbunden wird. Insbesondere ist die gemeinsame Mittelachse der Luftfeder, des Abrollkolbens und des Zentrierkegels deckungsgleich mit einer Mittelachse des kreisrunden Aufnahmetellers.

Bevorzugt stützt sich eine ringförmige Außenwand des Abrollkolbens mit ihrer dem Luftfederträger zugewandten Stirnseite unmittelbar auf einem kreisrunden Aufnahmeteller des Luftfederträgers ab. Auf diese Weise wird neben der vorgenannten, kreisringförmigen Kontaktfläche zwischen dem Abrollkolben und dem Luftfederträger sowie der Kontaktfläche zwischen dem Dom des Abrollkolbens und dem Zentrierkegel ein weiterer tragender Flächenanteil zur Abstützung der Luftfeder auf dem Luftfederträger bereitgestellt. Insbesondere weist die Außenwand des Abrollkolbens zumindest im Wesentlichen den gleichen Außendurchmesser auf wie der Aufnahmeteller, wodurch ein Schmutzeintrag in den nach der Bodenseite hin offenen, im Wesentlichen hohlzylindrisch ausgebildeten Zwischenraum, der zwischen der Zwischenwand und der Außenwand angeordnet ist, vermieden wird. Da die ringförmige Außenwand senkrecht auf dem Aufnahmeteller steht, kann sie einen relativ hohen Traganteil übernehmen.

In vorteilhafter Weise ist der Abrollkolben in einem Arbeitsgang in einem Spritzgussverfahren einbaufertig herstellbar. Diese kostengünstige Herstellung ist unter anderem deshalb möglich, weil der im Wesentlichen hohlzylindrisch ausgebildete Zwischenraum, der zwischen der Zwischenwand und der Außenwand angeordnet ist, nach der Bodenseite hin offen ausgebildet ist.

Vorteilhaft weist der Zentrierkegel an seinem größten Durchmesser eine umlaufende Fase auf, die konzentrisch zu der Mittelachse der Luftfeder angeordnet ist und die eine zylindermantelförmige Oberfläche aufweist, wobei der Abschnitt des Zentrierkegels, der diese Fase aufweist, durch eine in den Luftfederträger eingelassene Einsenkung formschlüssig aufgenommen ist. Diese Anordnung ist vorteilhaft, um grö-ßere Radialkräfte, die beispielsweise von einem Bremsvorgang herrühren und die senkrecht zu der Mittelachse wirken, sicher aufnehmen zu können. Scherkräfte werden bei dieser Anordnung nicht oder nicht allein über den Schaft des Zentrierkegels übertragen, sondern (auch) über den im Bereich der Fase wesentlich dickeren Zentrierkegel. Insbesondere ist die Einsenkung zylindrisch ausgebildet und zentrisch in den Aufnahmeteller eingelassen. Insbesondere ist die Mittelachse des kreisrunden Aufnahmetellers deckungsgleich mit einer Mittelachse der Einsenkung.

Zweckmäßig ist die Luftfeder anschlagpufferfrei ausgebildet. Damit ist gemeint, dass die Luftfeder keinen integrierten Anschlagpuffer aufweist, durch den die Bewegung der Luftfeder in Richtung der Mittelachse begrenzt ist. Diese Bewegungsbegrenzung stellt normalerweise zugleich auch eine Begrenzung für einen Einfederweg einer Starrachse dar. Luftfedern mit integriertem Anschlagpuffer haben den Nachteil, dass sie in der Regel nur für eine spezielle Fahrwerkanordnung ausgelegt sind. Luftfedern ohne einen solchen integrieren Anschlagpuffer haben den Vorteil, dass sie in verschiedenen Fahrwerkanordnungen eingesetzt werden können. Bei einer Verwendung von anschlagpufferfreien Luftfedern weisen die entsprechenden Fahrwerkanordnungen in der Regel an anderen Stellen Anschlagpuffer auf, die den Einfederweg der zugehörigen Starrachsen begrenzen.

Im Folgenden wird die Erfindung anhand lediglich Ausführungsbeispiele darstellender Zeichnungsfiguren näher erläutert, wobei sich gleiche Bezugszeichen auf gleiche Bauteile oder Elemente beziehen. Dabei zeigt:
- Fig. 1: in einer perspektivischen Ansicht von schräg unten eine Fahrwerkanordnung gemäß dem Stand der Technik;
- Fig. 2: in einer perspektivischen Ansicht von schräg oben einen Luftfederträger mit zwei Luftfedern gemäß der Erfindung;
- Fig. 3: in einer Schnittdarstellung eine der beiden Luftfedern aus Figur 2;
- Fig. 4: in einer perspektivischen Darstellung von schräg unten die Luftfeder aus Figur 3;
- Fig. 5a: in einer Schnittdarstellung eine Verbindungsanordnung gemäß einer ersten Ausführungsform der Erfindung;
- Fig. 5b: in einer perspektivischen Darstellung von schräg oben einen Zentrierzapfen aus Figur 5a;
- Fig. 6a: in einer Schnittdarstellung eine Verbindungsanordnung gemäß einer zweiten Ausführungsform der Erfindung und
- Fig. 6b: in einer perspektivischen Darstellung von schräg oben einen Zentrierzapfen aus Figur 6a.

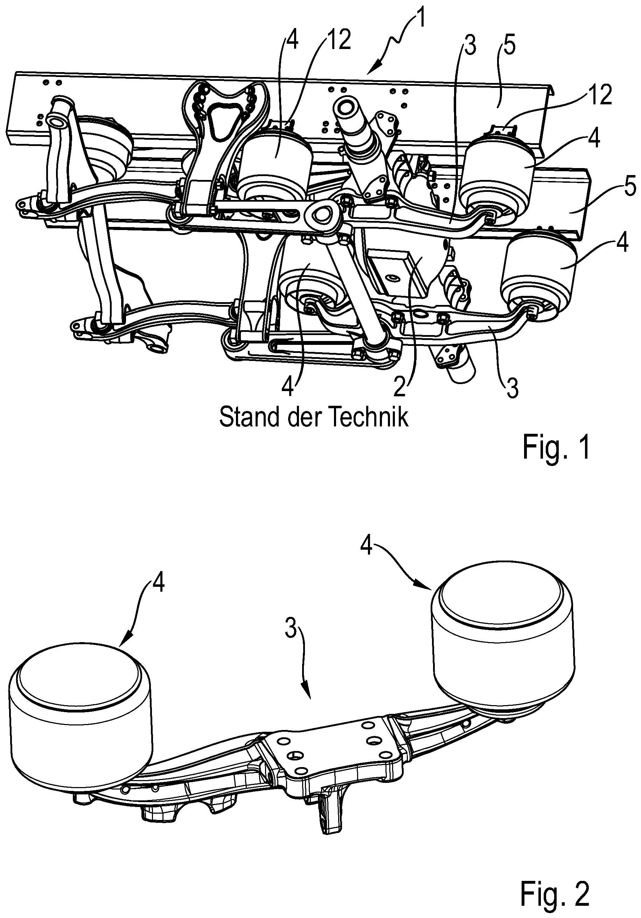

Fig. 1 zeigt eine aus dem Stand der Technik bekannte Fahrwerkanordnung 1 eines Kraftfahrzeugs, das als ein Nutzfahrzeug ausgebildet ist. Die Fahrwerkanordnung 1 weist eine luftgefederte Starrachse 2 auf, die über jeweils einen Luftfederträger 3 pro Fahrzeugseite und insgesamt vier Luftfedern 4 an zwei, sich parallel zueinander erstreckende, Längsträger 5 eines Fahrzeugrahmens angebunden ist. Die Luftfedern 4 sind durch Befestigungswinkel 12 mit dem jeweils zugeordneten Längsträger 5 verbunden.

Ein in Fig. 2 dargestellter Luftfederträger 3 weist an jedem seiner beiden Enden jeweils eine an dem Luftfederträger 3 befestigte Luftfeder 4 auf. Die beiden Luftfedern 4 weisen an ihren Oberseiten jeweils einen hier nicht dargestellten Druckluftanschluss und einen hier ebenfalls nicht dargestellten Befestigungswinkel 12 auf.

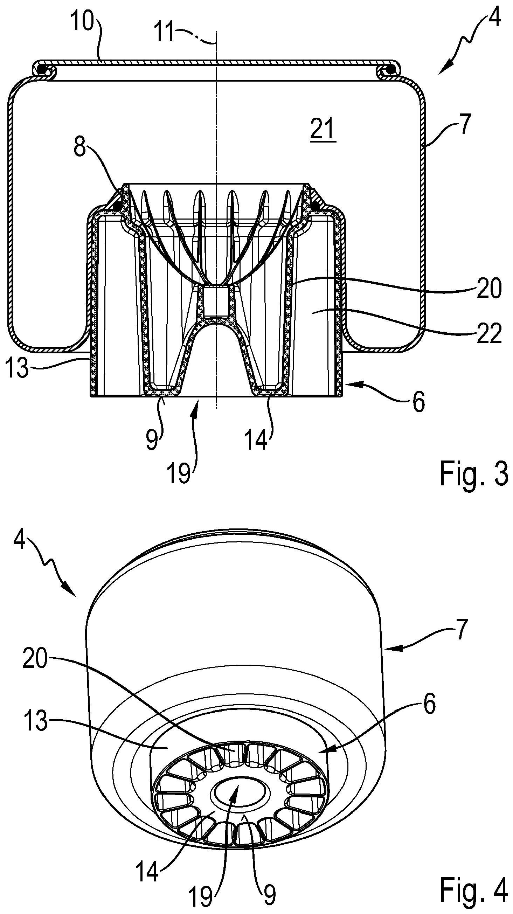

Fig. 3 zeigt die für ein Nutzfahrzeug geeignete Luftfeder 4, wobei die Luftfeder 4 einen Abrollkolben 6 aufweist, der aus einem thermoplastischen Kunststoff besteht und der in einem Arbeitsgang in einem Spritzgussverfahren einbaufertig hergestellt ist. Ein Rollbalg 7 der Luftfeder 4 ist luftdicht an einen Stutzen 8 des Abrollkolbens 6 angebunden. Die anschlagpufferfrei ausgebildete Luftfeder 4 ist zur Federung einer luftgefederten Starrachse 2 eines Kraftfahrzeugs geeignet. Eine Bodenseite 9 des Abrollkolbens 6 ist in einem Einbauzustand der Luftfeder 4 dem Luftfederträger 3 zugewandt. Über einen Deckel 10 der Luftfeder 4, der parallel beabstandet zu der Bodenseite 9 angeordnet ist, kann die Luftfeder 4 an einen Längsträger 5 eines Fahrzeugrahmens eines Nutzfahrzeugs angebunden werden. Dabei ist zwischen dem Deckel 10 und dem Längsträger 5 ein hier nicht dargestellter Befestigungswinkel 12 angeordnet, der fest mit dem Deckel 10 verbunden ist. Eine Mittelachse 11 des Abrollkolbens 6 ist deckungsgleich mit einer Mittelachse 11 der Luftfeder 4. Eine Außenmantelfläche einer ringförmigen Außenwand 13 des Abrollkolbens 6 dient als Anlagefläche für den Rollbalg 7. Im Einbauzustand der Luftfeder 4 rollt sich der Rollbalg 7 an der Außenmantelfläche der ringförmigen Außenwand 13 ab, wenn die Luftfeder 4 bei einem Einfedern der luftgefederten Starrachse 2 zusammengedrückt wird.

In seiner Bodenseite 9 weist der Abrollkolben 6 eine rotationssymmetrisch zu der Mittelachse 11 ausgebildete Ausnehmung 19 auf, die als ein Dom 19 ausgebildet ist. Der Dom 19 ist Bestandteil einer werkzeuglos lösbaren Verbindungsanordnung 15 zwischen der Luftfeder 4 und dem Luftfederträger 3 und dient dabei zur Anbindung des Abrollkolbens 6 an den Luftfederträger 3. Der Dom 19 ist nach der Bodenseite 9 hin offen ausgebildet und verjüngt sich von der Bodenseite 9 weg in Richtung der Mittelachse 11 konisch. Eine ringförmig ausgebildete, luftundurchlässige Zwischenwand 20 des Abrollkolbens 6 ist sowohl konzentrisch zu der Außenwand 13 als auch konzentrisch zu dem Dom 19 angeordnet. Die Zwischenwand 20 umschließt einen sich in den Abrollkolben 6 hinein erstreckenden, luftdichten Druckraum 21 der Luftfeder 4. Der Druckraum 21 ist nach der Bodenseite 9 des Abrollkobens 6 hin ebenfalls luftundurchlässig ausgebildet ist. Zwischen der Zwischenwand 20 und der Außenwand 13 ist ein im Wesentlichen hohlzylindrisch ausgebildeter Zwischenraum 22 angeordnet, der nach der Bodenseite 9 hin offen ausgebildet ist.

In Fig. 4 ist zu erkennen, dass der Druckraum 21 nach der Bodenseite 9 des Abrollkolbens 6 hin eine kreisringförmig ausgebildete Wandung 14 aufweist. Die Zwischenwand 20 und die Außenwand 13 sind durch sich radial von der Zwischenwand 20 weg erstreckende Außenrippen miteinander verbunden. Dabei erstrecken sich die plattenförmig ausgebildeten Außenrippen in Ebenen, die die Mittelachse 11 des Abrollkolbens 6 beinhalten. Weiterhin ist zu erkennen, dass es sich bei dem Zwischenraum 22 nicht um einen einzigen Zwischenraum, sondern um mehrere kreisringförmig angeordnete Einzelzwischenräume handelt, die jeweils einen Kreisringsegment-Querschnitt aufweisen, der durch zwei benachbarte Außenrippen, die Außenwand 13 und die Zwischenwand 20 begrenzt sind.

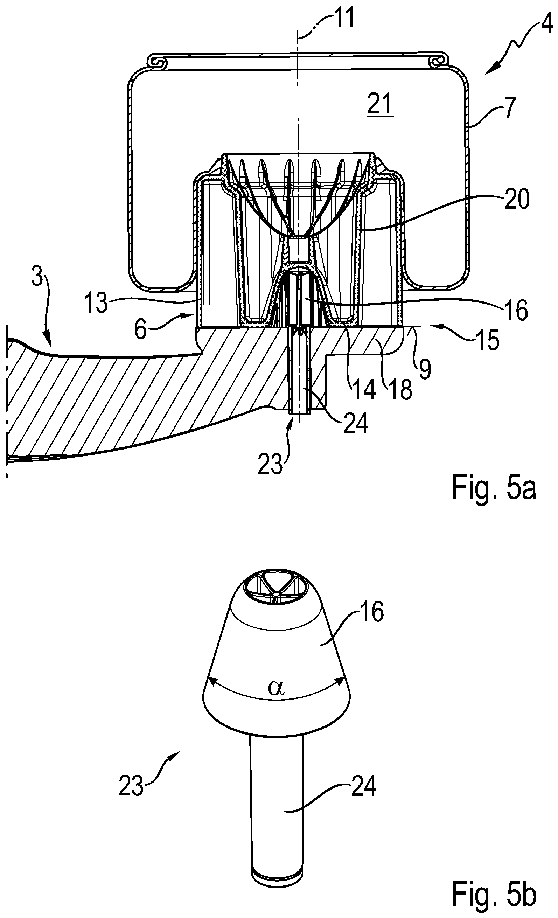

Fig. 5a zeigt die Verbindungsanordnung 15 zwischen der Luftfeder 4 und dem Luftfederträger 3, wobei die Verbindungsanordnung 15 werkzeuglos lösbar ist. Der Abrollkolben 6 der Luftfeder 4 weist in seiner dem Luftfederträger 3 zugewandten Bodenseite 9 die zuvor beschriebene Ausnehmung auf, die als ein Dom 19 ausgebildet ist. An dem Luftfederträger 3 ist ein in den Dom 19 passender Zentrierkegel 16 befestigt, der von dem Abrollkolben 6 vollständig übergriffen ist. Die gemeinsame Mittelachse 11 der Luftfeder 4 und des Abrollkolbens 6 ist zugleich auch die Mittelachse 11 des Zentrierkegels 16. Der Abrollkolben 6 und der Zentrierkegel 16 bestehen aus einem thermoplastischen Kunststoff, der spritzgussfähig ist. Der Abrollkolben 6 stützt sich in Richtung der Mittelachse 11 sowohl unmittelbar an dem Zentrierkegel 16 als auch unmittelbar an dem Luftfederträger 3 flächig anliegend ab. Der Zentrierkegel 16, der einen Kegelwinkel α von 30 Grad aufweist, greift formschlüssig und zugleich flächig anliegend in den konischen Dom 19 des Abrollkolbens 6 ein. Der Dom 19 weist an der Bodenseite 9 des Abrollkolbens 6 einen Durchmesser auf, der im Wesentlichen ein Drittel so groß ist wie der Außendurchmesser des Abrollkolbens 6.

Der Druckraum 21 der Luftfeder 4 ist lediglich durch die kreisringförmige Wandung 14 des Abrollkolbens 6, die sich senkrecht zu der Mittelachse 11 der Luftfeder 4 erstreckt und die sich unmittelbar auf dem Luftfederträger 3 flächig anliegend abstützt, von dem Luftfederträger 3 getrennt. Die luftundurchlässige Zwischenwand 20 des Abrollkolbens 6 fasst an dessen Bodenseite 9 die kreisringförmige Wandung 14 ein und ist zugleich konzentrisch zu der ringförmigen Außenwand 13 des Abrollkolbens 6 angeordnet sowie von der ringförmigen Außenwand 13 umschlossen. Der Abrollkolben 6 stützt sich auf einem kreisrunden Aufnahmeteller 18 des Luftfederträgers 3 ab, wobei der Aufnahmeteller 18 im Wesentlichen den gleichen Außendurchmesser aufweist wie der Abrollkolben 6 an seiner Bodenseite 9. Die ringförmige Außenwand 13 des Abrollkolbens 6 stützt sich mit ihrer dem Luftfederträger 3 zugewandten Stirnseite unmittelbar auf dem kreisrunden Aufnahmeteller 18 des Luftfederträgers 3 ab.

Wie aus Fig. 5b in Verbindung mit Fig. 5a hervorgeht, ist der Zentrierkegel 16 Bestandteil eines Zentrierzapfens 23, der darüber hinaus einen sich in Richtung der Mittelachse 11 der Luftfeder 4 erstreckenden Schaft 24 aufweist, der den Luftfederträger 3 durchsetzt. Der Schaft 24 und eine diesen aufnehmende Bohrung in dem kreisrunden Aufnahmeteller 18 des Luftfederträgers 3 weisen zueinander eine Spielpassung auf, wodurch der Schaft 24 in der Bohrung drehbar ist. Der aus dem Zentrierkegel 16 und dem Schaft 24 bestehende Zentrierzapfen 23 ist einstückig ausgebildet. Das dem Zentrierkegel 16 abgewandte Ende des Schaftes 24 steht aus dem Luftfederträger 3 vor und weist dort eine umlaufende Nut zur Aufnahme eines Sicherungsrings auf.

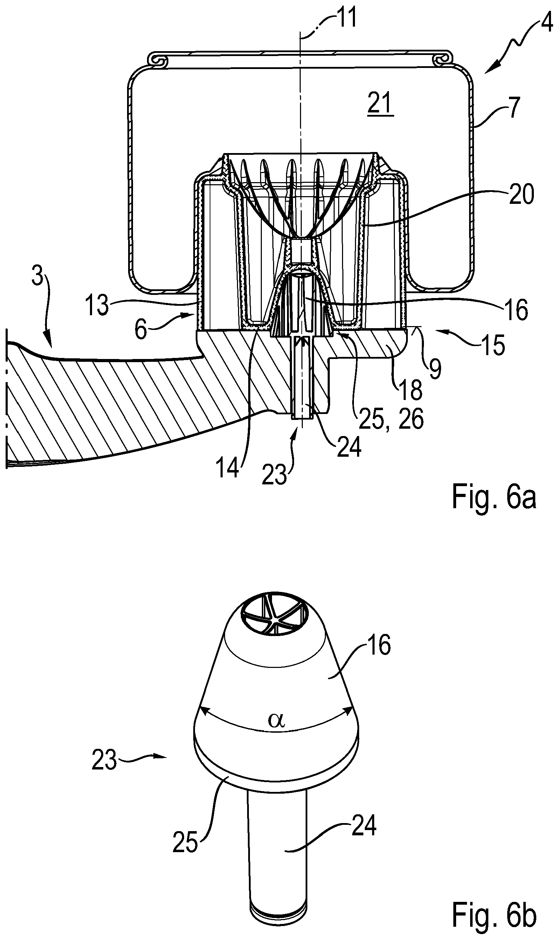

Fig. 6a zeigt eine alternativ ausgebildete Verbindungsanordnung 15, die sich von der gemäß Fig. 5a lediglich darin unterscheidet, dass der Zentrierkegel 16 an seinem größten Durchmesser eine umlaufende Fase 24 aufweist (siehe auch Fig. 6b), die konzentrisch zu der Mittelachse 11 der Luftfeder 4 angeordnet ist und die eine zylindermantelförmige Oberfläche aufweist, wobei der Abschnitt des Zentrierkegels 16, der diese Fase 24 aufweist, durch eine in den Luftfederträger 3 eingelassene, zylindrische Einsenkung 26 formschlüssig aufgenommen ist.

### Bezugszeichen

- 1: Fahrwerkanordnung
- 2: Starrachse
- 3: Luftfederträger
- 4: Luftfeder
- 5: Längsträger
- 6: Abrollkolben
- 7: Rollbalg
- 8: Stutzen
- 9: Bodenseite der Luftfeder, des Abrollkolbens und des Zentrierkegels
- 10: Deckel
- 11: Mittelachse der Luftfeder, des Abrollkolbens und des Zentrierkegels
- 12: Befestigungswinkel
- 13: Außenwand
- 14: kreisringförmige Wandung
- 15: Verbindungsanordnung
- 16: Zentrierkegel
- 17: Stirnseite des Endbereichs
- 18: Aufnahmeteller
- 19: Ausnehmung, Dom
- 20: Zwischenwand
- 21: Druckraum
- 22: Zwischenraum
- 23: Zentrierzapfen
- 24: Schaft
- 25: Fase
- 26: Einsenkung

- α: Kegelwinkel

## Patentansprüche

1. Verbindungsanordnung (15) zwischen einer Luftfeder (4) und einem Luftfederträger (3),
- wobei die Verbindungsanordnung (15) werkzeuglos lösbar ist,
- wobei ein Abrollkolben (6) der Luftfeder (4) in seiner dem Luftfederträger (3) zugewandten Bodenseite (9) eine Ausnehmung (19) aufweist,
- wobei an dem Luftfederträger (3) ein in die bodenseitige Ausnehmung (19) des Abrollkolbens (6) passender Zentrierkegel (16) befestigt ist,
- wobei der Zentrierkegel (16) von dem Abrollkolben (6) vollständig übergriffen ist und
- wobei der Zentrierkegel (16) und der Abrollkolben (6) eine gemeinsame Mittelachse (11) aufweisen, die zugleich auch die Mittelachse (11) der Luftfeder (4) ist,
**dadurch gekennzeichnet,**
- **dass** der Abrollkolben (6) und der Zentrierkegel (16) aus Kunststoff gebildet sind und
- **dass** sich der Abrollkolben (6) in Richtung der Mittelachse (11) sowohl unmittelbar an dem Zentrierkegel (16) als auch unmittelbar an dem Luftfederträger (3) flächig anliegend abstützt.

2. Verbindungsanordnung (15) nach Anspruch 1, **dadurch gekennzeichnet, dass** die bodenseitige Ausnehmung (19) des Abrollkolbens (6) als ein rotationssymmetrisch zu der Mittelachse (11) der Luftfeder (4) ausgebildeter, konischer Dom (19) ausgebildet ist, in den der Zentrierkegel (16) formschlüssig und zugleich flächig anliegend eingreift.

3. Verbindungsanordnung (15) nach Anspruch 2, **dadurch gekennzeichnet, dass** der Dom (19) nach der Bodenseite (9) des Abrollkolbens (6) hin konisch aufgeweitet ausgebildet ist und an der Bodenseite (9) einen Durchmesser aufweist, der weniger als halb so groß ist wie der Außendurchmesser des Abrollkolbens (6).

4. Verbindungsanordnung (15) nach einem der vorhergehenden Ansprüche, **dadurch gekennzeichnet, dass** ein Druckraum (21) der Luftfeder (4) lediglich durch eine kreisringförmige Wandung (14) des Abrollkolbens (6) von dem Luftfederträger (3) getrennt ist, wobei die kreisringförmige Wandung (14) in einem Betriebszustand von der Druckraumseite her mit einem Betriebsdruck beaufschlagt ist.

5. Verbindungsanordnung (15) nach einem der vorhergehenden Ansprüche, **dadurch gekennzeichnet, dass** der Abrollkolben (6) eine kreisringförmige Wandung (14) aufweist, die sich senkrecht zu der Mittelachse (11) der Luftfeder (4) erstreckt und die sich unmittelbar auf dem Luftfederträger (3) flächig anliegend abstützt.

6. Verbindungsanordnung (15) nach Anspruch 4 oder 5, **dadurch gekennzeichnet, dass** der Abrollkolben (6) eine ringförmig ausgebildete, luftundurchlässige Zwischenwand (20) aufweist, die an der Bodenseite (9) des Abrollkolbens (6) die kreisringförmige Wandung (14) einfasst und die zugleich konzentrisch zu einer ringförmigen Außenwand (13) des Abrollkolbens (6) angeordnet ist sowie von dieser ringförmigen Außenwand (13) umschlossen ist.

7. Verbindungsanordnung (15) nach Anspruch 6, **dadurch gekennzeichnet, dass** ein im Wesentlichen hohlzylindrisch ausgebildeter Zwischenraum (22), der zwischen der Zwischenwand (20) und der Außenwand (13) angeordnet ist, nach der Bodenseite (9) hin offen ausgebildet ist.

8. Verbindungsanordnung (15) nach einem der vorhergehenden Ansprüche, **dadurch gekennzeichnet, dass** der Zentrierkegel (16) einen Kegelwinkel (α) von weniger als 45 Grad, vorzugsweise von circa 30 Grad, aufweist.

9. Verbindungsanordnung (15) nach einem der vorhergehenden Ansprüche, **dadurch gekennzeichnet, dass** der Zentrierkegel (16) Bestandteil eines Zentrierzapfens (23) ist und der Zentrierzapfen (23) darüber hinaus einen sich in Richtung der Mittelachse (11) der Luftfeder (4) erstreckenden Schaft (24) aufweist, der den Luftfederträger (3) durchsetzt.

10. Verbindungsanordnung (15) nach Anspruch 9, **dadurch gekennzeichnet, dass** der Schaft (24) und eine diesen aufnehmende Bohrung in dem Luftfederträger (3) zueinander eine Spielpassung aufweisen, wodurch der Schaft (24) in der Bohrung drehbar ist.

11. Verbindungsanordnung (15) nach einem der vorhergehenden Ansprüche,
**dadurch gekennzeichnet, dass** sich der Abrollkolben (6) auf einem kreisrunden Aufnahmeteller (18) des Luftfederträgers (3) abstützt, wobei der Aufnahmeteller (18) zumindest im Wesentlichen den gleichen Außendurchmesser aufweist wie der Abrollkolben (6) an seiner Bodenseite (9).

12. Verbindungsanordnung (15) nach einem der vorhergehenden Ansprüche,
**dadurch gekennzeichnet, dass** sich eine ringförmige Außenwand (13) des Abrollkolbens (6) mit ihrer dem Luftfederträger (3) zugewandten Stirnseite unmittelbar auf einem kreisrunden Aufnahmeteller (18) des Luftfederträgers (3) abstützt.

13. Verbindungsanordnung (15) nach einem der vorhergehenden Ansprüche,
**dadurch gekennzeichnet, dass** der Abrollkolben (6) in einem Arbeitsgang in einem Spritzgussverfahren einbaufertig herstellbar ist.

14. Verbindungsanordnung (15) nach einem der vorhergehenden Ansprüche,
**dadurch gekennzeichnet, dass** der Zentrierkegel (16) an seinem größten Durchmesser eine umlaufende Fase (25) aufweist, die konzentrisch zu der Mittelachse (11) der Luftfeder (4) angeordnet ist und die eine zylindermantelförmige Oberfläche aufweist und dass der Abschnitt des Zentrierkegels (16), der diese Fase (25) aufweist, durch eine in den Luftfederträger (3) eingelassene Einsenkung (26) formschlüssig aufgenommen ist.

15. Verbindungsanordnung (15) nach einem der vorhergehenden Ansprüche,
**dadurch gekennzeichnet, dass** die Luftfeder (4) anschlagpufferfrei ausgebildet ist.

## Claims

1. Connection assembly (15) between a pneumatic spring (4) and a pneumatic spring support (3),
- wherein the connection assembly (15) is releasable without a tool,
- wherein a rolling piston (6) of the pneumatic spring (4) has a recess (19) in its bottom side (9) facing the pneumatic spring support (3),
- wherein a centring cone (16) fitting into the bottom-side recess (19) of the rolling piston (6) is fastened to the pneumatic spring support (3),
- wherein the centring cone (16) is completely engaged over by the rolling piston (6), and
- wherein the centring cone (16) and the rolling piston (6) have a common central axis (11) which at the same time is also the central axis (11) of the pneumatic spring (4),
**characterized**
- **in that** the rolling piston (6) and the centring cone (16) are formed from plastic, and
- **in that** the rolling piston (6) is supported in the direction of the central axis (11) in a manner lying flat both directly against the centring cone (16) and also directly against the pneumatic spring support (3).

2. Connection assembly (15) according to Claim 1, **characterized in that** the bottom-side recess (19) of the rolling piston (6) is designed as a conical dome (19) which is formed rotationally symmetrically with respect to the central axis (11) of the pneumatic spring (4) and in which the centring cone (16) engages in a form-fitting manner and at the same time in a manner lying flat against it.

3. Connection assembly (15) according to Claim 2, **characterized in that** the dome (19) is formed in a manner widened conically towards the bottom side (9) of the rolling piston (6) and, on the bottom side (9), has a diameter which is less than half the size of the outside diameter of the rolling piston (6).

4. Connection assembly (15) according to one of the preceding claims, **characterized in that** a pressure chamber (21) of the pneumatic spring (4) is separated from the pneumatic spring support (3) only by a circular ring-shaped wall (14) of the rolling piston (6), wherein the circular ring-shaped wall (14) is acted upon from the pressure chamber side with an operating pressure in an operating state.

5. Connection assembly (15) according to one of the preceding claims, **characterized in that** the rolling piston (6) has a circular ring-shaped wall (14) which extends perpendicularly to the central axis (11) of the pneumatic spring (4) and which is supported in a manner lying flat directly on the pneumatic spring support (3).

6. Connection assembly (15) according to Claim 4 or 5, **characterized in that** the rolling piston (6) has an airimpermeable intermediate wall (20) which is formed annularly, encloses the circular ring-shaped wall (14) on the bottom side (9) of the rolling piston (6) and which at the same time is arranged concentrically with respect to an annular outer wall (13) of the rolling piston (6) and is surrounded by said annular outer wall (13) .

7. Connection assembly (15) according to Claim 6, **characterized in that** a substantially hollow-cylindrically formed intermediate space (22) which is arranged between the intermediate wall (20) and the outer wall (13) is open towards the bottom side (9).

8. Connection assembly (15) according to one of the preceding claims, **characterized in that** the centring cone (16) has a cone angle (α) of less than 45 degrees, preferably of circa 30 degrees.

9. Connection assembly (15) according to one of the preceding claims, **characterized in that** the centring cone (16) is part of a centring pin (23), and the centring pin (23) furthermore has a stem (24) which extends in the direction of the central axis (11) of the pneumatic spring (4) and passes through the pneumatic spring support (3).

10. Connection assembly (15) according to Claim 9, **characterized in that** the stem (24) and a bore receiving the latter have a clearance fit with respect to each other in the pneumatic spring support (3), as a result of which the stem (24) is rotatable in the bore.

11. Connection assembly (15) according to one of the preceding claims, **characterized in that** the rolling piston (6) is supported on a circular receiving plate (18) of the pneumatic spring support (3), the receiving plate (18) having at least substantially the same outer diameter as the rolling piston (6) on its bottom side (9) .

12. Connection assembly (15) according to one of the preceding claims, **characterized in that** an annular outer wall (13) of the rolling piston (6) is directly supported by its end face facing the pneumatic spring support (3) on a circular receiving plate (18) of the pneumatic spring support (3).

13. Connection assembly (15) according to one of the preceding claims, **characterized in that** the rolling piston (6) can be produced by injection moulding ready for installation in one working step.

14. Connection assembly (15) according to one of the preceding claims, **characterized in that** the centring cone (16) has, on its largest diameter, a peripheral bevel (25) which is arranged concentrically with respect to the central axis (11) of the pneumatic spring (4) and which has a surface in the form of a cylinder jacket, and **in that** the portion of the centring cone (16) which has said bevel (25) is received in a form-fitting manner by a hollow (26) embedded in the pneumatic spring support (3).

15. Connection assembly (15) according to one of the preceding claims, **characterized in that** the pneumatic spring (4) is free from a stop buffer.

## Revendications

1. Ensemble de raccordement (15) entre un ressort pneumatique (4) et un support de ressort pneumatique (3),
- l'ensemble de raccordement (15) pouvant être détaché sans outil,
- un piston de déroulage (6) du ressort pneumatique (4) présentant un évidement (19) dans son côté de base (9) tourné vers le support de ressort pneumatique (3),
- un cône de centrage (16) s'ajustant dans l'évidement (19) côté base du piston de déroulage (6) étant fixé au support de ressort pneumatique (3),
- le cône de centrage (16) étant complètement recouvert par le piston de déroulage (6) et
- le cône de centrage (16) et le piston de déroulage (6) présentant un axe médian (11) commun, qui est en même temps l'axe médian (11) du ressort pneumatique (4),
**caractérisé**
- **en ce que** le piston de déroulage (6) et le cône de centrage (16) sont formés à partir de matière synthétique et
- **en ce que** le piston de déroulage (6) est supporté à la fois directement sur le cône de centrage (16) et directement sur le support de ressort pneumatique (3) de manière à s'appuyer contre des surfaces de ceux-ci en direction de l'axe médian (11).

2. Ensemble de raccordement (15) selon la revendication 1, **caractérisé en ce que** l'évidement (19) côté base du piston de déroulage (6) est réalisé sous la forme d'un mandrin conique (19) réalisé de manière à présenter une symétrie de révolution par rapport à l'axe médian (11) du ressort pneumatique (4), mandrin conique dans lequel le cône de centrage (16) vient en prise par complémentarité de formes et en même temps de manière à s'appuyer contre des surfaces de celui-ci.

3. Ensemble de raccordement (15) selon la revendication 2, **caractérisé en ce que** le mandrin (19) est réalisé de manière évasée de façon conique vers le côté de base (9) du piston de déroulage (6) et présente, au niveau du côté de base (9), un diamètre qui est inférieur à la moitié du diamètre extérieur du piston de déroulage (6).

4. Ensemble de raccordement (15) selon l'une des revendications précédentes, **caractérisé en ce qu'**un espace de pression (21) du ressort pneumatique (4) est séparé du support de ressort pneumatique (3) seulement par une paroi (14) annulaire circulaire du piston de déroulage (6), la paroi (14) annulaire circulaire étant soumise à une pression de fonctionnement à partir du côté espace de pression dans un état de fonctionnement.

5. Ensemble de raccordement (15) selon l'une des revendications précédentes, **caractérisé en ce que** le piston de déroulage (6) présente une paroi (14) annulaire circulaire qui s'étend perpendiculairement à l'axe médian (11) du ressort pneumatique (4) et qui est supportée directement sur le support de ressort pneumatique (3) de manière à s'appuyer contre des surfaces de celui-ci.

6. Ensemble de raccordement (15) selon la revendication 4 ou 5, **caractérisé en ce que** le piston de déroulage (6) présente une paroi intermédiaire (20) réalisée de manière annulaire, imperméable à l'air, laquelle paroi intermédiaire entoure la paroi (14) annulaire circulaire au niveau du côté de base (9) du piston de déroulage (6) et laquelle est disposée en même temps de manière concentrique à une paroi extérieure (13) annulaire du piston de déroulage (6) et est cernée par cette paroi extérieure (13) annulaire.

7. Ensemble de raccordement (15) selon la revendication 6, **caractérisé en ce qu'**un espace intermédiaire (22) réalisé de manière sensiblement cylindrique creuse, qui est disposé entre la paroi intermédiaire (20) et la paroi extérieure (13), est réalisé de manière ouverte vers le côté de base (9).

8. Ensemble de raccordement (15) selon l'une des revendications précédentes, **caractérisé en ce que** le cône de centrage (16) présente un angle de cône (α) inférieur à 45 degrés, de préférence d'environ 30 degrés.

9. Ensemble de raccordement (15) selon l'une des revendications précédentes, **caractérisé en ce que** le cône de centrage (16) fait partie d'un tourillon de centrage (23) et le tourillon de centrage (23) présente en outre une tige (24) s'étendant en direction de l'axe médian (11) du ressort pneumatique (4), laquelle tige traverse le support de ressort pneumatique (3).

10. Ensemble de raccordement (15) selon la revendication 9, **caractérisé en ce que** la tige (24) et un alésage, recevant celle-ci, dans le support de ressort pneumatique (3) présentent un ajustement avec jeu l'un par rapport à l'autre, de sorte que la tige (24) peut tourner dans l'alésage.

11. Ensemble de raccordement (15) selon l'une des revendications précédentes, **caractérisé en ce que** le piston de déroulage (6) est supporté sur un plateau de réception (18) circulaire du support de ressort pneumatique (3), le plateau de réception (18) présentant au moins sensiblement le même diamètre extérieur que le piston de déroulage (6) au niveau de son côté de base (9) .

12. Ensemble de raccordement (15) selon l'une des revendications précédentes, **caractérisé en ce qu'**une paroi extérieure (13) annulaire du piston de déroulage (6) est supportée, par son côté frontal tourné vers le support de ressort pneumatique (3), directement sur un plateau de réception (18) circulaire du support de ressort pneumatique (3).

13. Ensemble de raccordement (15) selon l'une des revendications précédentes, **caractérisé en ce que** le piston de déroulage (6) peut être fabriqué de manière prête au montage en une seule opération dans un procédé de moulage par injection.

14. Ensemble de raccordement (15) selon l'une des revendications précédentes, **caractérisé en ce que** le cône de centrage (16) présente, au niveau de son plus grand diamètre, un chanfrein (25) périphérique, qui est disposé de manière concentrique à l'axe médian (11) du ressort pneumatique (4) et qui présente une surface en forme d'enveloppe cylindrique, et **en ce que** la partie du cône de centrage (16) qui présente ce chanfrein (25) est reçue avec complémentarité de formes par un renfoncement (26) encastré dans le support de ressort pneumatique (3).

15. Ensemble de raccordement (15) selon l'une des revendications précédentes, **caractérisé en ce que** le ressort pneumatique (4) est réalisé de manière dépourvue de tampon de butée.
